# EUROPÄISCHE PATENTSCHRIFT

(11) **EP 1 789 703 B1**
(45) Veröffentlichungstag und Bekanntmachung des Hinweises auf die Patenterteilung: **12.10.2011**
(21) Anmeldenummer: 05777788.0
(22) Anmeldetag: 16.08.2005
(51) Int. Cl.: F16H 61/00

(54) **STEUERGERÄT FÜR EIN KRAFTFAHRZEUGGETRIEBE**
CONTROL DEVICE FOR A MOTOR VEHICLE GEARBOX
APPAREIL DE COMMANDE POUR UNE TRANSMISSION DE VEHICULE A MOTEUR

(30) Priorität: 16.09.2004 DE 102004045328; 04.05.2005 DE 102005020926
(43) Veröffentlichungstag der Anmeldung: 30.05.2007
(73) Patentinhaber: Continental Automotive GmbH, 30165 Hannover (DE)
(72) Erfinder: FINK, Martin, 90427 Nürnberg (DE); JANISCH, Christian, 93133 Burglengenfeld (DE); SMIRRA, Karl, 83512 Wasserburg (DE)
(86) Internationale Anmeldenummer: PCT/EP2005/054024
(87) Internationale Veröffentlichungsnummer: WO 2006/029946

(56) Entgegenhaltungen:
- EP-A- 0 525 855
- WO-A-03/081087
- GB-A- 2 319 312
- GB-A- 2 343 295
- US-A1- 2004 045 736
- PATENT ABSTRACTS OF JAPAN Bd. 014, Nr. 135 (M-0949), 14. März 1990 (1990-03-14) -& JP 02 003741 A (JAPAN AUTOM TRANSMISSION CO LTD), 9. Januar 1990 (1990-01-09)

## Beschreibung

Die Erfindung betrifft ein Steuergerät für ein Kraftfahrzeuggetriebe, das im Motorraum unmittelbar am Getriebe angebaut werden kann.

Für die Anordnung eines Getriebesteuergerätes innerhalb eines Kraftfahrzeugs sind verschiedene Möglichkeiten bekannt.

Bei so genannten "Stand alone"-Lösungen wird das Getriebesteuergerät - im Folgenden als TCU (Transmission Control Unit) bezeichnet - dezentral im Passagierraum montiert. Das hat den Vorteil, dass die dort vorherrschenden Umgebungsbedingungen es ermöglichen, ein Steuergerät zu verwenden, das nicht hermetisch dicht ausgeführt wird. Dies führt zu einer deutlichen Kosteneinsparung. Andererseits führt die dezentrale Anordnung der TCU in relativ großer Entfernung zu den zu steuernden Ventilen innerhalb des Getriebes und zu Sensoren, deren Signale für die Steuerungsaufgabe benötigt werden, zu einem erhöhten Verkabelungsaufwand, der insbesondere hohe Qualitätsrisiken birgt.

Bekannt ist auch, eine Getriebesteuerung in das Steuergerät der Motorsteuerung zu integrieren. Derartige Steuergeräte werden häufig als Power Control Unit (PCU) bezeichnet. Derartige Steuergeräte sind in der Regel hermetisch dicht konstruiert, um sie im Motorraum verbauen zu können und dadurch die Verkabelungswege zu den Ventilen und zu den Sensoren kurz zu halten. Dieses Konzept erfordert aber eine gleichzeitige und abgestimmte Entwicklung von Motor- und Getriebesteuerung, die wirtschaftlich erst bei großen Stückzahlen interessant wird. Des Weiteren muss das Modul den hohen Belastungen in der Einbauumgebung hinsichtlich Temperatur, Vibration, Stößen, Feuchtigkeit, Salzsprühnebel und ähnlichem gerecht werden.

In den letzten Jahren wurden auch vermehrt so genannte Mechatronik-Konzepte umgesetzt, bei denen die TCU direkt in das Getriebe integriert wird - meist an der Hydraulikplatte in der Nähe der Ventile montiert. Dabei sind die mechanischen, elektrischen und sensorischen Komponenten in kompakter Form einander ergänzend verbaut. Auf diese Weise werden keine zusätzlichen Steckverbindungen benötigt, um die Ventile ansteuern und Sensorsignale übertragen zu können. Die Steuerung (Sensorik und Software) kann bereits in der Getriebemontage auf das jeweilige Getriebe eingelernt, abgestimmt und justiert werden. Ein derartiges System besitzt die höchste Zuverlässigkeit. Evtl. notwendige Reparaturen sind jedoch äußerst aufwändig und wegen der kritischeren Einbauumgebung muss das Steuergerät noch höheren Belastungen, z.B. unmittelbarer Kontakt mit Getriebeöl, standhalten, was zu deutlich erhöhten Kosten führt.

Weiterhin bekannt sind sog. "Add On"-Lösungen, bei denen die TCU direkt am Getriebe angeordnet ist. Hierzu muss die TCU hermetisch dicht konstruiert sein, damit sie im Motorraum am Getriebe verbaut werden kann. Dadurch sind die Verkabelungswege zu den einzelnen Getriebesensoren relativ kurz (Kabelbüschel) und es besteht die Möglichkeit, die Sensorkabel mittels nur eines Steckers an der TCU kontaktieren zu können. Auch kann die Steuerung (Sensorik und/oder Software) bereits in der Getriebemontage auf das jeweilige Getriebe eingelernt, abgestimmt und justiert werden. Auch ein derartiges Steuergerät muss selbstverständlich den hohen Belastungen in der Einbauumgebung gerecht werden.

Die EP-A-0525 855 offenbart ein gattungsgemäβes Stenergerät.

Aufgabe der Erfindung ist es, ein Steuergerät für ein Kraftfahrzeuggetriebe zu schaffen, das als so genanntes "Add On"-System an einem Kraftfahrzeuggetriebe positioniert und verbaut werden kann. Dabei wird verbessertes ein Steckersystem benötigt, damit das Steuergerät mit der Fahrzeugelektronik und mit den im Getriebe befindlichen Ventilen (z.B. Druckregel-, Parksperr- und Kühlventile) und Sensoren (z.B. Drehzahl-, Temperatur- und Drucksensoren) verbunden werden kann. Außerdem soll die Winkelstellung der Schaltwelle durch einen in dem Steuergerät integrierten Winkelpositionssensor überwacht werden. Weiterhin muss das Steuergerät den in der Einbauumgebung (Motorraum) einwirkenden Belastungen, wie z.B. Temperatur, Vibration, Stoß, feuchte Wärme, Salzsprühnebel, Öl, usw. standhalten und Ausfälle müssen vermieden werden. Diese Aufgabe wird durch ein Steuergerät für ein Kraftfahrzeuggetriebe mit den Merkmalen des Patentanspruchs 1 gelöst. Vorteilhafte Aus- und Weiterbildungen, welche einzeln oder in Kombination miteinander eingesetzt werden können, sind der Gegenstand der abhängigen Ansprüche.

Ausführungsbeispiele der Erfindung werden im Folgenden anhand der Figuren erläutert.

Darin zeigen:
- Fig. 1: eine Explosionsdarstellung einer ersten Ausführungsform;
- Fig. 2: eine schematische Darstellung der ersten Ausführungsform ohne Gehäuse;
- Fig. 3: eine schematische Darstellung der ersten Ausführungsform mit abgenommenem Gehäuseunterteil;
- Fig. 4: eine weitere schematische Darstellung der ersten Ausführungsform mit abgenommenem Gehäuseunterteil;
- Fig. 5: eine schematische Darstellung der ersten Ausführungsform im fertig montierten Zustand;
- Fig. 6: eine Schnittdarstellung der ersten Ausführungsform gemäß Fig. 5;
- Fig. 7: eine Explosionsdarstellung einer zweiten Ausführungsform;
- Fig. 8: eine schematische Darstellung der zweiten Ausführungsform ohne Gehäuse;
- Fig. 9: eine schematische Darstellung der zweiten Ausführungsform mit abgenommenem Gehäuseunterteil;
- Fig. 10: eine weitere schematische Darstellung der zweiten Ausführungsform mit abgenommenem Gehäuseunterteil;
- Fig. 11: eine schematische Darstellung der zweiten Ausführungsform im fertig montierten Zustand;
- Fig. 12: eine Schnittdarstellung der zweiten Ausführungsform gemäß Fig. 11;
- Fig. 13: eine Explosionsdarstellung einer dritten Ausführungsform;
- Fig. 14: eine schematische Darstellung der dritten Ausführungsform ohne Gehäuse;
- Fig. 15: eine schematische Darstellung der dritten Ausführungsform mit abgenommenem Gehäuseunterteil;
- Fig. 16: eine weitere schematische Darstellung der dritten Ausführungsform mit abgenommenem Gehäuseunterteil;
- Fig. 17: eine schematische Darstellung der dritten Ausführungsform im fertig montierten Zustand;
- Fig. 18: eine Schnittdarstellung der dritten Ausführungsform gemäß Fig. 17;
- Fig. 19: eine Explosionsdarstellung einer vierten Ausführungsform;
- Fig. 20: eine schematische Darstellung der vierten Ausführungsform ohne Gehäuse;
- Fig. 21: eine schematische Darstellung der vierten Ausführungsform mit abgenommenem Gehäuseoberteil;
- Fig. 22: eine weitere schematische Darstellung der vierten Ausführungsform mit abgenommenem Gehäuseoberteil;
- Fig. 23: eine weitere schematische Darstellung der vierten Ausführungsform mit abgenommenem Gehäuseoberteil;
- Fig. 24: eine schematische Darstellung der vierten Ausführungsform im fertig montierten Zustand;
- Fig. 25: eine Schnittdarstellung der vierten Ausführungsform gemäß Fig. 24;
- Fig. 26: eine Explosionsdarstellung einer fünften Ausführungsform;
- Fig. 27: eine schematische Darstellung der fünften Ausführungsform ohne Gehäuse;
- Fig. 28: eine schematische Darstellung der fünften Ausführungsform mit abgenommenem Gehäuseoberteil;
- Fig. 29: eine weitere schematische Darstellung der fünften Ausführungsform mit abgenommenem Gehäuseoberteil;
- Fig. 30: eine weitere schematische Darstellung der fünften Ausführungsform mit abgenommenem Gehäuseoberteil;
- Fig. 31: eine schematische Darstellung der fünften Ausführungsform im fertig montierten Zustand von unten;
- Fig. 32: eine schematische Darstellung der fünften Ausführungsform im fertig montierten Zustand von oben;
- Fig. 33: eine Schnittdarstellung der fünften Ausführungsform gemäß den Fig. 31 und 32;
- Fig. 34: eine Explosionsdarstellung einer sechsten Ausführungsform;
- Fig. 35: eine schematische Darstellung der sechsten Ausführungsform ohne Gehäuse;
- Fig. 36: eine schematische Darstellung der sechsten Ausführungsform mit abgenommenem Gehäuseoberteil;
- Fig. 37: eine weitere schematische Darstellung der sechsten Ausführungsform mit abgenommenem Gehäuseoberteil;
- Fig. 38: eine weitere schematische Darstellung der sechsten Ausführungsform mit abgenommenem Gehäuseoberteil;
- Fig. 39: eine schematische Darstellung der sechsten Ausführungsform im fertig montierten Zustand von unten;
- Fig. 40: eine Schnittdarstellung der dritten Ausführungsform gemäß Fig. 39;
- Fig. 41: eine Explosionsdarstellung einer siebten Ausführungsform;
- Fig. 42: eine schematische Darstellung der siebten Ausführungsform ohne Gehäuse;
- Fig. 43: eine schematische Darstellung der siebten Ausführungsform mit abgenommenem Gehäuseoberteil;
- Fig. 44: eine weitere schematische Darstellung der siebten Ausführungsform mit abgenommenem Gehäuseoberteil;
- Fig. 45: eine weitere schematische Darstellung der siebten Ausführungsform mit abgenommenem Gehäuseoberteil;
- Fig. 46: eine schematische Darstellung der siebten Ausführungsform im fertig montierten Zustand von unten;
- Fig. 47: eine schematische Darstellung der siebten Ausführungsform im fertig montierten Zustand von oben; und
- Fig. 48: eine Schnittdarstellung der siebten Ausführungsform gemäß den Fig. 46 und 47.

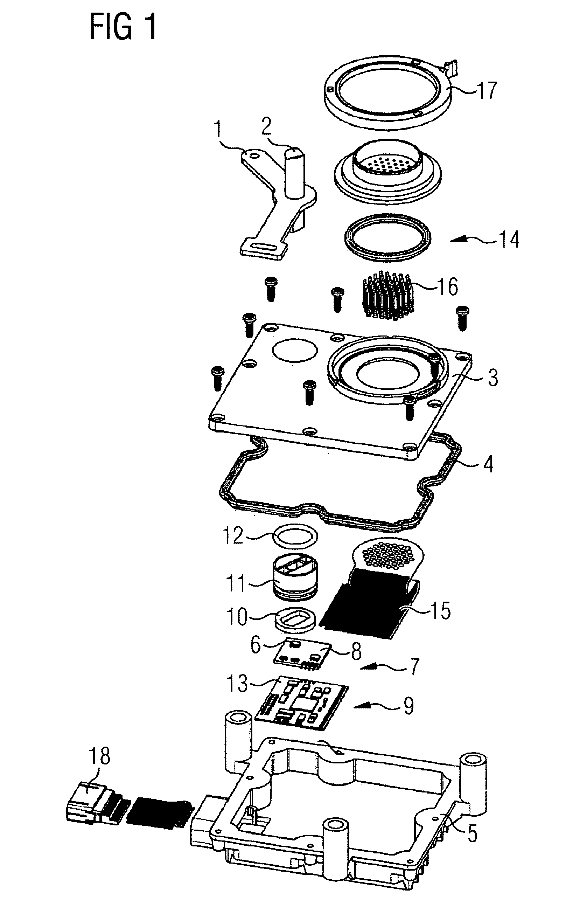

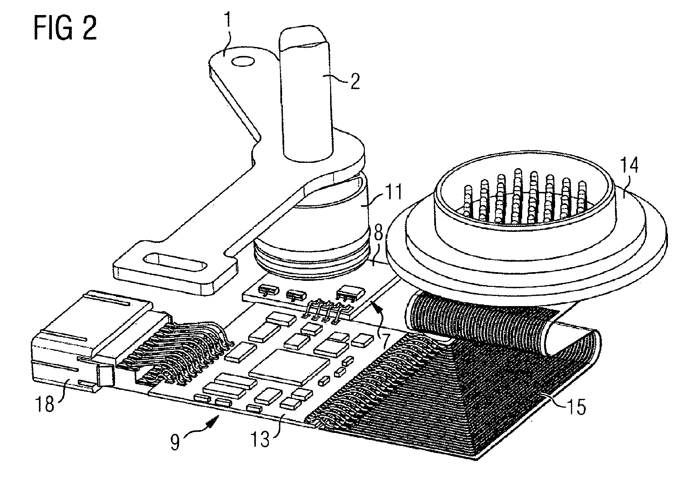

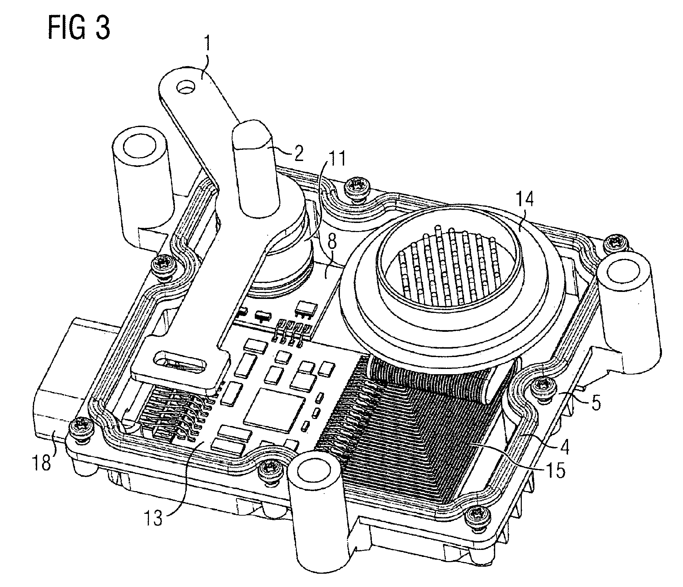

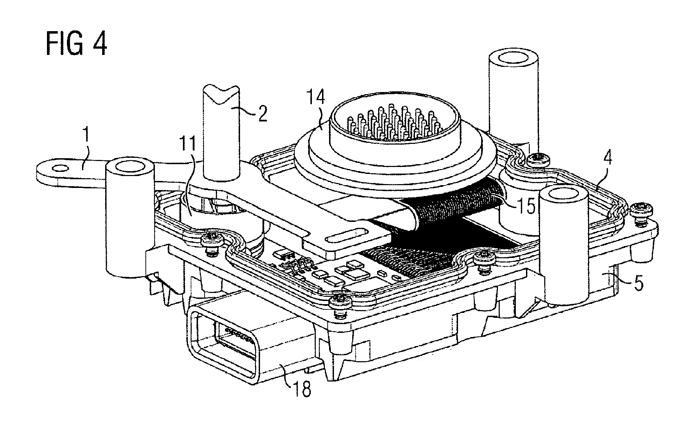

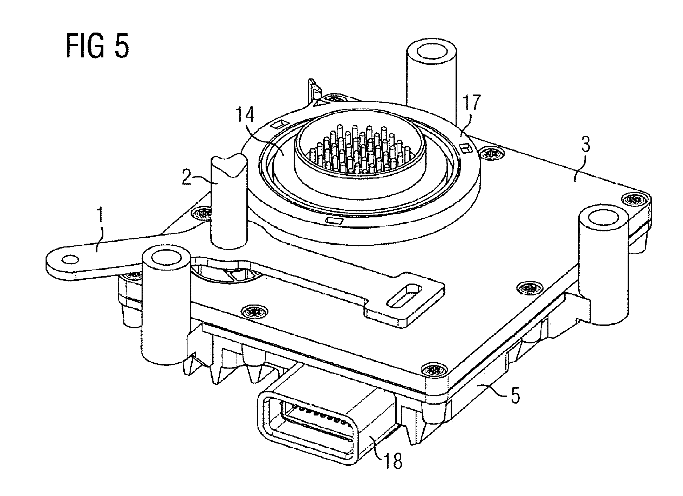

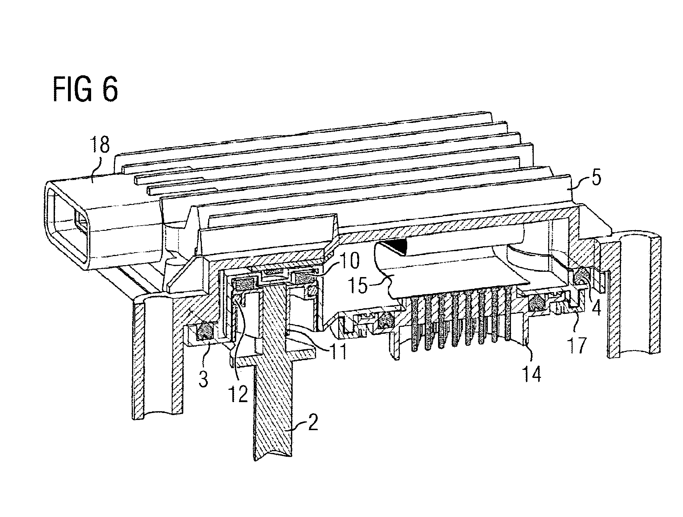

Gemäß einem ersten Ausführungsbeispiel (Fig. 1 bis 6) einer TCU befindet sich ein Schaltwellen-Hebel 1 der an der Schaltwelle 2 eines ansonsten nicht dargestellten Getriebes befestigt ist, nach der Montage der TCU an das Getriebe zwischen der TCU und dem nicht dargestellten Getriebegehäuse. Das Schaltwellen-Ende steht nach der Montage nicht über das TCU-Gehäuse hinaus und befindet sich nicht im hermetisch abgedichteten Bereich der TCU. Das TCU-Gehäuse besteht aus einem Gehäuseunterteil 3, das als Kunststoffdeckel ausgebildet ist und eine Gehäusedichtung 4 aufnimmt, und einem Gehäuseoberteil 5, das als Aluminiumgusswanne ausgeführt ist und mit Kühlrippen versehen ist. Das Gehäuseober- und -unterteil werden gedichtet miteinander verbunden, vorzugsweise verschraubt.

Ein Winkelpositionssensor 6 ist zusammen mit einer Winkelpositionssensor-Elektronik 7 auf einer Leiterplatte 8 untergebracht und wird z.B. durch Bondverbindungen mit einer Getriebesteuerungs-Elektronik 9 verbunden. Der Winkelpositionssensor 6 ist so ausgerichtet, dass er in axialer Richtung detektiert. Ein Winkelpositionssensor-Magnet 10 ist mit Kunststoff umspritzt und an diesem Kunststoffteil 11 - im folgenden Magnetträger genannt - wird ein O-Ring 12 aufgefädelt. Lediglich zur Verdeutlichung sind der Winkelpositionssensor-Magnet 10 und der Magnetträger 11 in Fig. 1 als getrennte Elemente dargestellt. Der Magnetträger 11 wird in dem Gehäuseunterteil 3 verliersicher und von außerhalb des Gehäuses schwenkbar montiert. Die Leiterplatte 8 wird am Boden des Gehäuseoberteils 5, z.B. mittels Verklebung oder Verschraubung, befestigt. Die Getriebesteuerungs-Elektronik 9 ist vorzugsweise in einer Multilayer-Keramik-Substrat-Bauweise ausgeführt. Auch das Keramiksubstrat 13 wird am Boden des Gehäuseoberteils 5, z.B. mittels Verklebung oder Verschraubung, befestigt.

Ein Hydraulik- und Sensorikstecker 14 ist schwimmend gelagert am Gehäuseunterteil 3 angebracht. Die Leitungsführung zwischen diesem Stecker 14 und dem Keramiksubstrat 13 wird im Gehäuse durch eine flexible Leiterplatte 15 (Flexible Printed Circuit Board FPCB) umgesetzt. Die flexible Leiterplatte 15 ist dabei derart geführt, dass der Hydraulik- und Sensorikstecker 14 auch nach der Montage in alle Richtungen eine gewisse Bewegungsfreiheit aufweist (schwimmende Lagerung). Die flexible Leiterplatte 15 wird vorzugsweise durch Bondverbindungen mit der Getriebesteuerungs-Elektronik 9 und durch Laser-Schweiß-Verbindungen mit Stecker-Pins 16 des Hydraulikund Sensoriksteckers 14 verbunden. Die Kontaktierung mit einem das Getriebegehäuse abdichtenden, nicht dargestellten Gegenstecker, erfolgt bei der Montage der TCU auf das ebenfalls nicht dargestellte Getriebe. Durch einen Bajonett-Verschluss-Ring 17 erhält der Hydraulik- und Sensorikstecker 14 am Gehäuseunterteil 4 seine Fixierung.

Der Verbau eines Fahrzeugsteckers 18 findet in einer nicht hermetisch dichten Ausführung statt. Die Abdichtung wird durch einen nicht dargestellten Gegenstecker vom Fahrzeugkabelbaum erreicht, der gegen das Aluminium-Gehäuseoberteil 5 dichtet. Flachkontakt-Pins des Fahrzeugsteckers werden vorzugsweise durch Bondverbindungen mit der Getriebesteuerungs-Elektronik 9 verbunden.

Die Positionierung der TCU erfolgt bei der Montage des Steuergerätes auf das Getriebe durch das Aufstecken des Magnetträgers 11 auf die Schaltwelle 2.

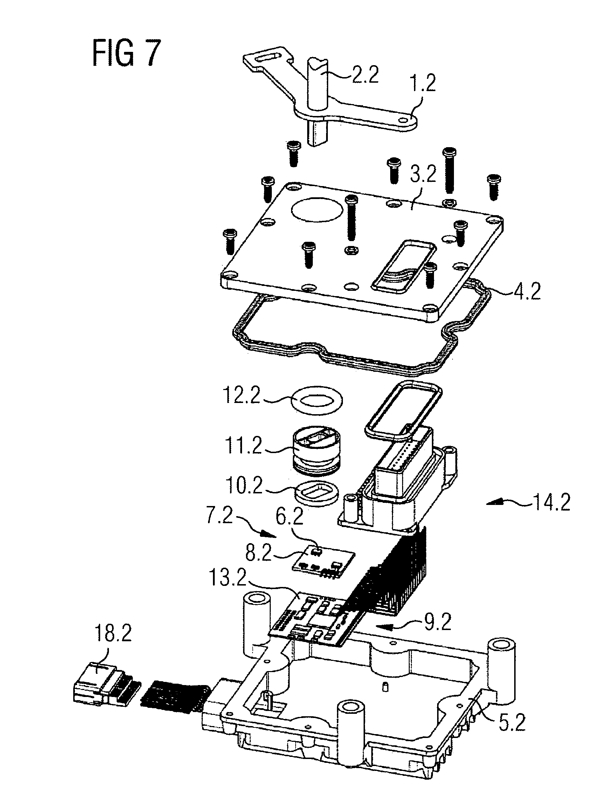

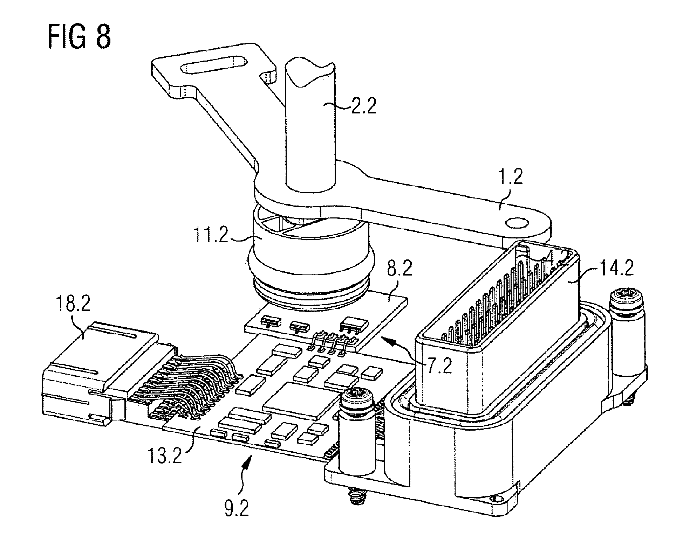

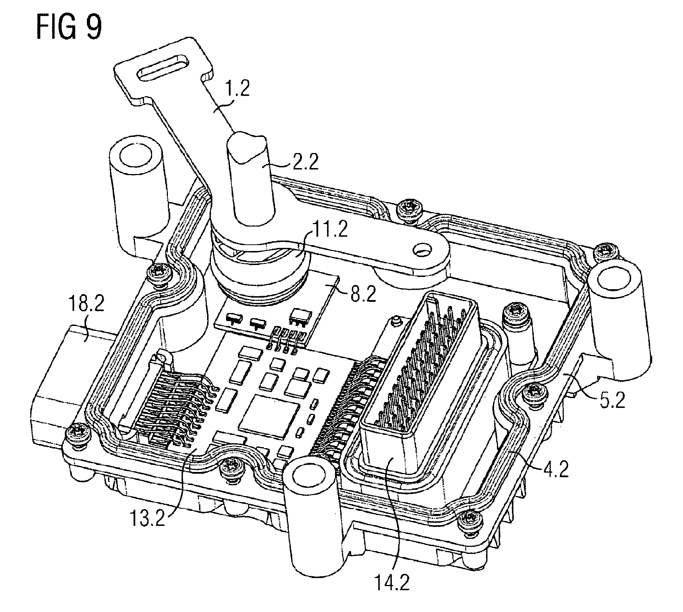

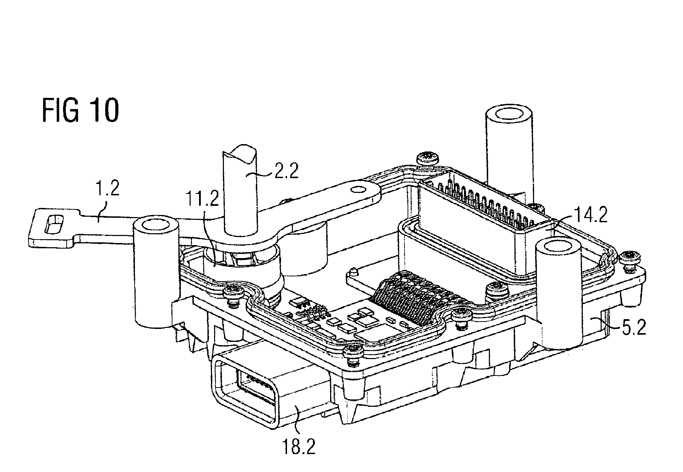

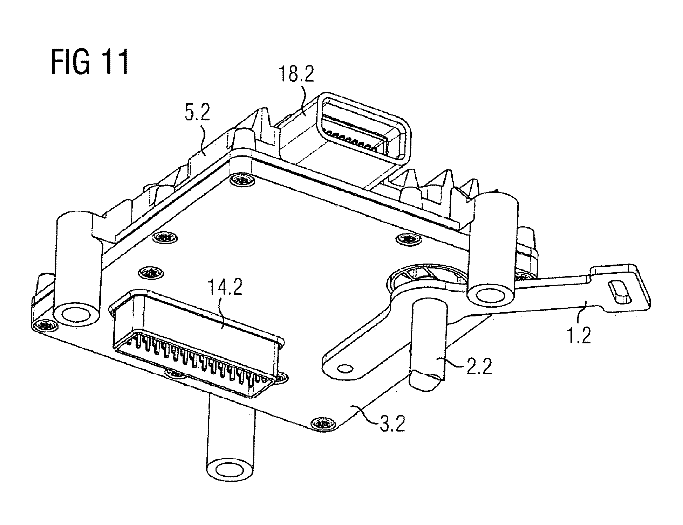

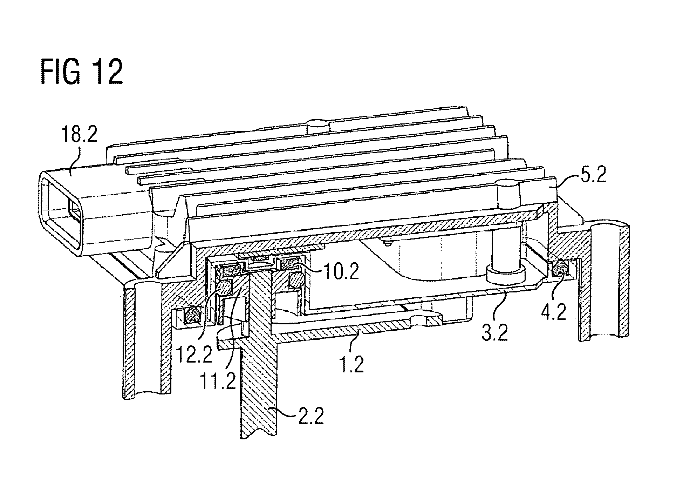

Ein zweites Ausführungsbeispiel der Erfindung ist in den Fig. 7 bis 12 dargestellt. Dabei sind die zu den einzelnen Elementen der ersten Ausführungsform korrespondierenden Elemente mit denselben Bezugszeichen gekennzeichnet, allerdings erweitert um ein ".2", das heißt beispielsweise die Schaltwelle 2 aus Fig. 1 ist in Fig. 7 dementsprechend durch ein Bezugszeichen 2.2 gekennzeichnet. Im Folgenden werden stets nur Unterschiede der einzelnen Ausführungsformen beschrieben. Die übrigen Bestandteile bleiben jeweils unverändert. Die zweite Ausführungsform unterscheidet sich von der ersten dadurch, dass ein Hydraulik- und Sensorikstecker 14.2 verwendet wird, der anders ausgestaltet ist. Auch dieser wird zwar abgedichtet an einem Gehäuseunterteil 3.2 angebracht, aber im Gegensatz zum Hydraulik- & Sensorikstecker 14 gemäß der ersten Ausführungsform nicht schwimmend gelagert. Somit kann auch auf eine Kontaktierung mittels einer flexiblen Leiterplatte verzichtet werden. Die Flachkontakt-Pins des Hydraulik- & Sensoriksteckers 14.2 werden vorzugsweise durch eine einfache Bondverbindung mit einer Getriebesteuerungs-Elektronik 9.2 verbunden. Die Kontaktierung, mit einem das Getriebegehäuse abdichtenden, nicht dargestellten Gegenstecker, erfolgt bei der Montage der TCU auf das ebenfalls nicht dargestellte Getriebe.

Ein Magnetträger 11.2 wird entsprechend der ersten Ausführungsform in dem Gehäuseunterteil 3.2 verliersicher und von außerhalb des Gehäuses schwenkbar montiert, ist aber außerdem in radialer Richtung schwimmend gelagert.

Die Positionierung der TCU erfolgt bei der Montage des Steuergerätes auf das nicht dargestellte Getriebe bei dieser Ausführungsform durch das Aufstecken des Hydraulik- & Sensoriksteckers 14.2 auf den Gegenstecker.

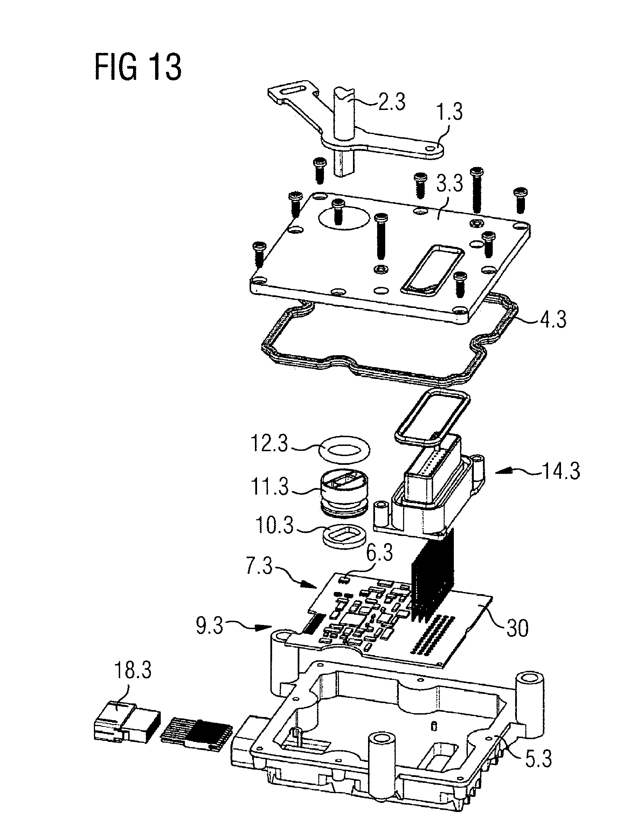

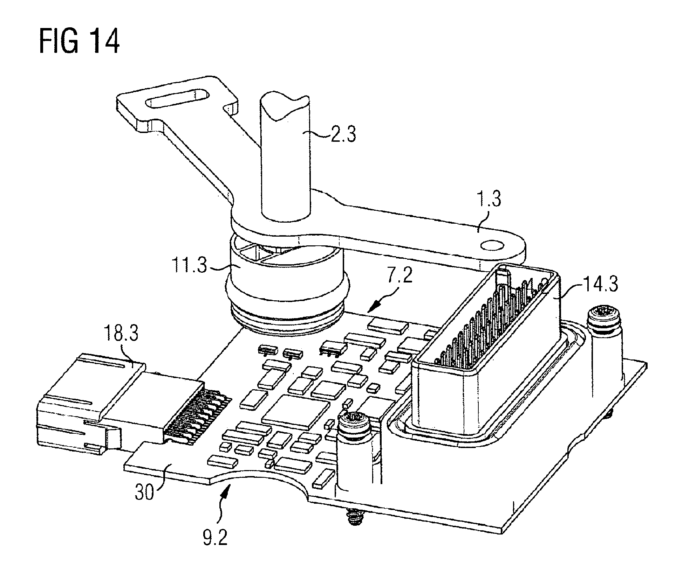

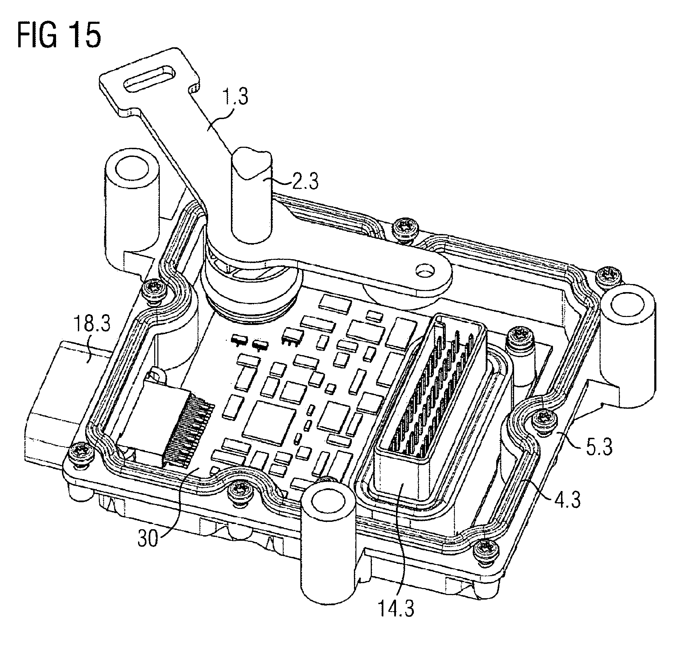

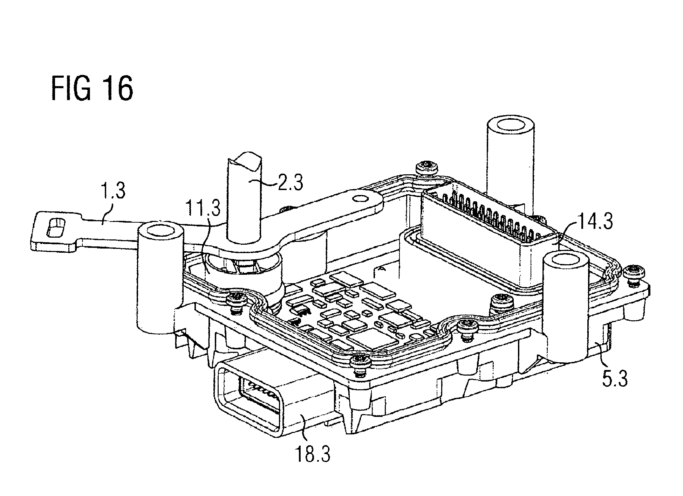

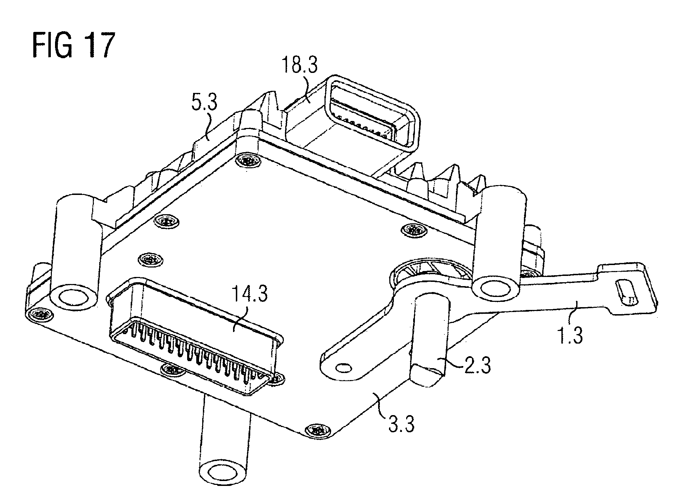

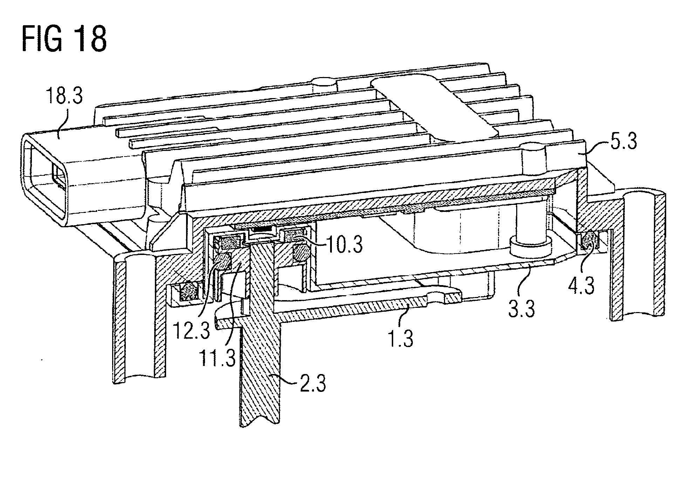

In den Fig. 13 bis 18 ist eine dritte Ausführungsform eines erfindungsgemäßen Steuergeräts dargestellt. Auch darin sind die zu den einzelnen Elementen der vorhergehenden Ausführungsformen korrespondierenden Elemente mit denselben Bezugszeichen gekennzeichnet, allerdings diesmal erweitert um ein ". 3".

Im Gegensatz zur Ausführungsform 2 ist bei dieser Ausführungsform eine Getriebesteuerungs-Elektronik 9.3 zusammen mit der Winkelpositionssensor-Elektronik 7.3 auf einer gemeinsamen Leiterplatte 30 untergebracht. Die Leiterplatte 30 wird am Boden eines Gehäuseoberteils 5.3, z.B. mittels Verklebung oder Verschraubung, befestigt.

Ein Hydraulik- & Sensorikstecker 14.3 ist abgedichtet an einem Gehäuseunterteil 3.3 angebracht. Dieser Stecker 14.3 kontaktiert mittels einer so genannten "Press Fit" -Steckverbindung die Getriebesteuerungs-Elektronik 9.3. Die Kontaktierung, mit dem das Getriebegehäuse abdichtenden, nicht dargestellten Gegenstecker erfolgt bei der Montage der TCU auf das ebenfalls nicht dargestellte Getriebe.

Der Verbau eines Fahrzeugsteckers 18.3 findet in einer nicht hermetisch dichten Ausführung statt. Die Abdichtung wird durch einen nicht dargestellten Gegenstecker vom Fahrzeugkabelbaum erreicht, der gegen das Aluminium-Gehäuseoberteil 5.3 dichtet. Der Fahrzeugstecker kontaktiert vorzugsweise mittels einer so genannten "Card Edge" - Steckverbindung (Direktstecken) die Getriebesteuerungs-Elektronik 9.3. Optional befindet sich der Fahrzeugstecker 18.3 anstatt eines Gegensteckers direkt am Fahrzeugkabelbaum-Kabelsatz und wird erst nach der Montage des Kabelbaums und des Getriebes im Fahrzeug mit der Getriebesteuerungs-Elektronik 9.3 kontaktiert.

Ein Winkelpositionssensor-Magnet 10.3 ist analog zu den beiden ersten Ausführungsformen mit einem Kunststoff-Magnetträger 11.3 umspritzt. An dem Magnetträger 11.3 ist ein O-Ring 12.3 aufgefädelt. Der Magnetträger 11.3 wird, entsprechend der zweiten Ausführungsform in dem Gehäuseunterteil 3.3 von außen schwenkbar und verliersicher montiert und ist in radialer Richtung schwimmend gelagert. Die Positionierung der TCU erfolgt analog zum zweiten Ausführungsbeispiel bei der Montage des Steuergerätes auf das Getriebe durch das Aufstecken des Hydraulik- & Sensoriksteckers 14.3 auf einen nicht dargestellten Gegenstecker.

Bei den nun folgenden Ausführungsformen 4 bis 7 ist im Gegensatz zu den Ausführungsformen 1 bis 3 ein Gehäuseunterteil 3.4 bis 3.7 jeweils als Aluminiumgusswanne ausgestaltet und ein Gehäuseoberteil 5.4 bis 5.7 ist als Kunststoffdeckel ausgebildet, der die Gehäusedichtung aufnimmt. Auch bei diesen Ausführungsformen werden beide Teile gedichtet miteinander verbunden, vorzugsweise verschraubt. Diese im Vergleich zu den vorhergehenden Ausführungsformen hinsichtlich des Gehäusematerials "gedrehte" Ausgestaltung des Gehäuses bietet die Option zur thermischen Anbindung des Steuergeräts an das Getriebegehäuse, da die gut Wärme leitende Aluminiumgusswanne direkt auf dem Getriebegehäuse befestigt wird.

Zu den einzelnen Elementen der vorhergehenden Ausführungsformen korrespondierende Elemente werden auch im Folgenden mit denselben Bezugszeichen gekennzeichnet, allerdings jeweils erweitert um ein ".x", wobei x der jeweiligen Ausführungsform entspricht, das heißt z.B. die Schaltwelle der fünften Ausführungsform wird mit 2.5 bezeichnet.

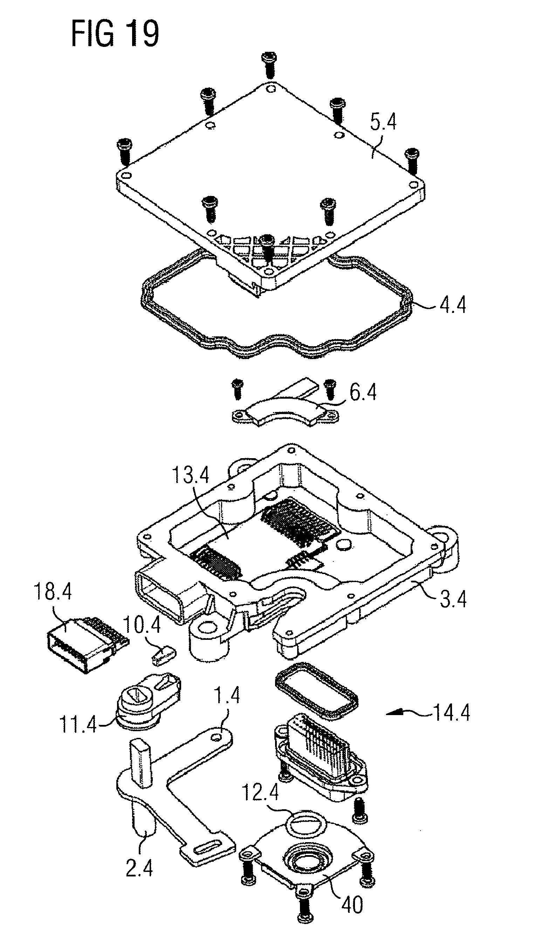

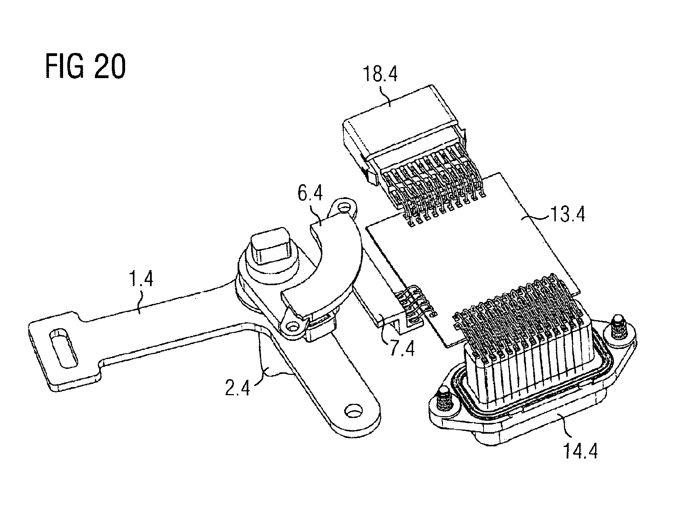

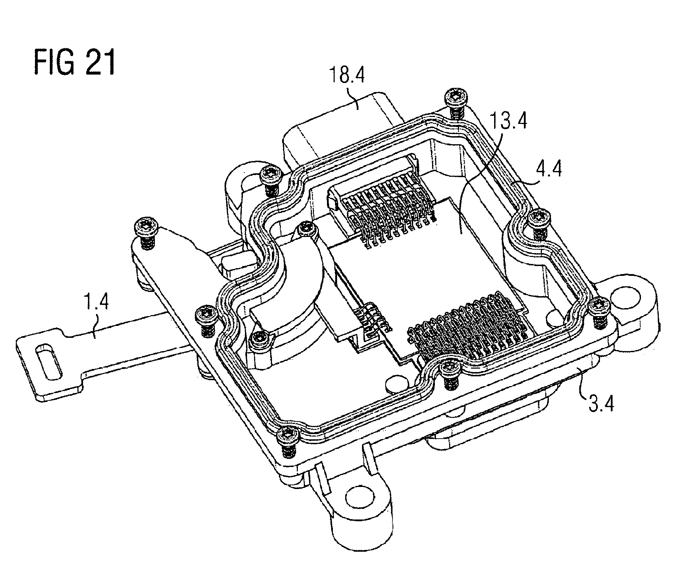

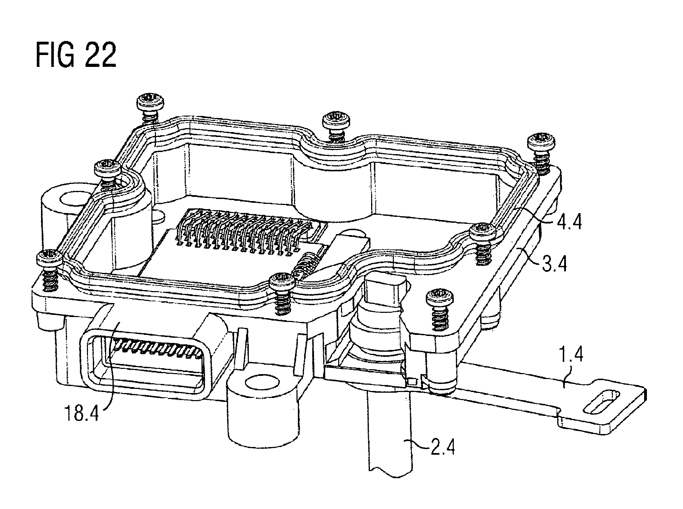

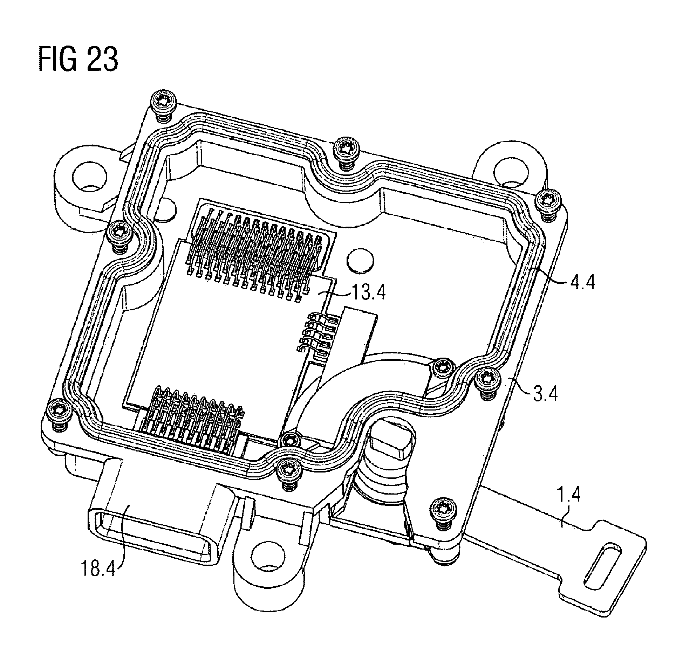

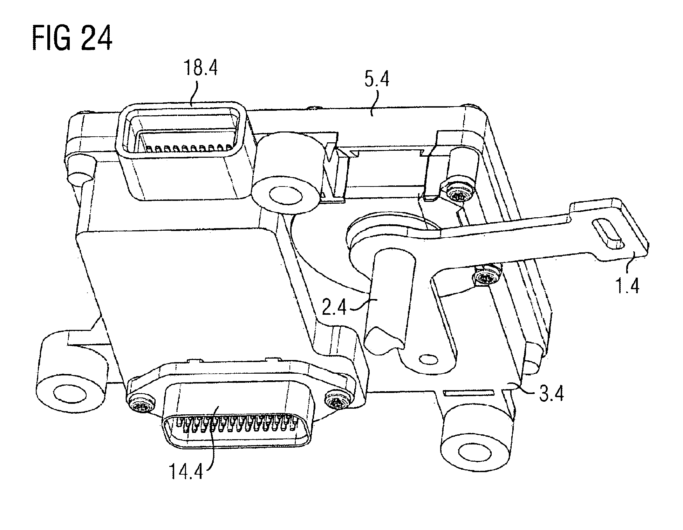

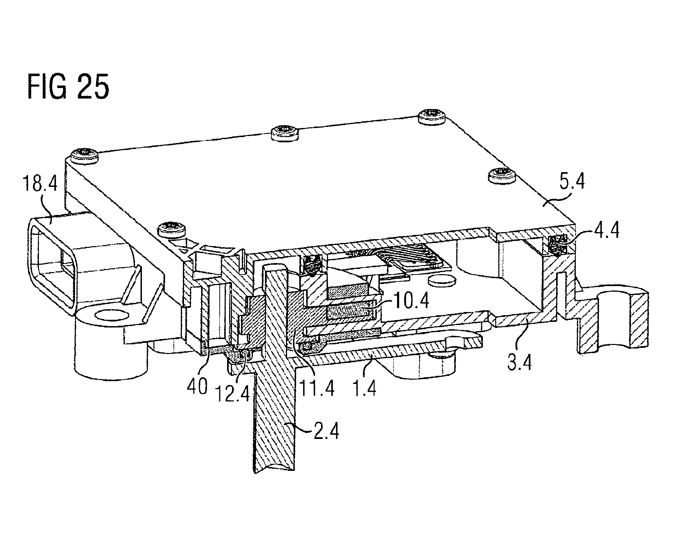

In einer vierten Ausführungsform (Fig. 19 bis 25) ist ein Winkelpositions-Sensor 6.4 (z.B. PLCD) in einer Bogensegment-Bauweise ausgeführt. Der Winkelpositions-Sensor 6.4 ist zur Achse einer Schaltwelle 2.4 zentriert an einem Gehäuseunterteil 3.4 befestigt und vorzugsweise durch Bondverbindungen mit einer Getriebesteuerungs-Elektronik 9.4 verbunden.

Ein Hydraulik- & Sensorikstecker 14.4 ist abgedichtet am Gehäuseunterteil 3.4 angebracht. Die Flachkontakt-Pins des Steckers 14.4 werden vorzugsweise durch Bondverbindungen mit der Getriebesteuerungs-Elektronik 9.4 verbunden. Die Kontaktierung mit dem das Getriebegehäuse abdichtenden Gegenstecker erfolgt bei der Montage der TCU auf das nicht dargestellte Getriebe.

Auch bei dieser Ausführungsform ist ein Winkelpositionssensor-Magnet 10.4 mit Kunststoff umspritzt. Auch hier ist der Deutlichkeit halber der Winkelpositionssensor-Magnet 10.4 getrennt von dem Kunststoff-Magnetträger 11.4 dargestellt. Der Magnetträger 10.4 wird in dem Gehäuseunterteil 3.4 von außen schwenkbar und verliersicher montiert und ist in radialer Richtung schwimmend gelagert. Im Unterschied zu den bisherigen Ausführungsformen wird der Magnetträger 10.4 in diesem Fall mit einer Abdeckung 40 arretiert, die zur Abdichtung einen o-Ring 12.4 aufnimmt.

Die Positionierung der TCU erfolgt analog zu der zweiten und dritten Ausführungsform bei der Montage des Steuergerätes auf das Getriebe durch das Aufstecken des Hydraulik- & Sensoriksteckers 14.4 auf den nicht dargestellten Gegenstecker.

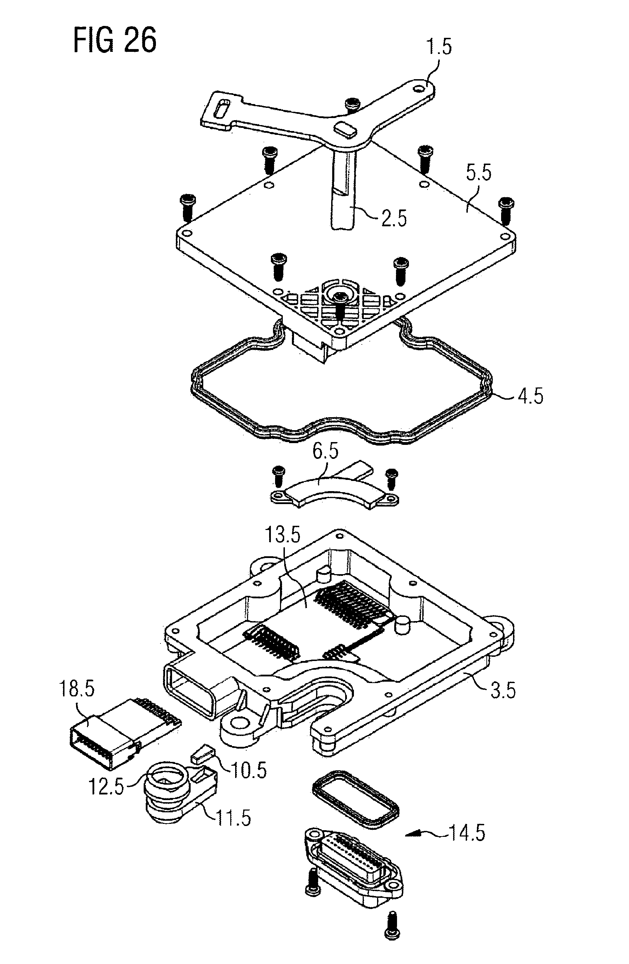

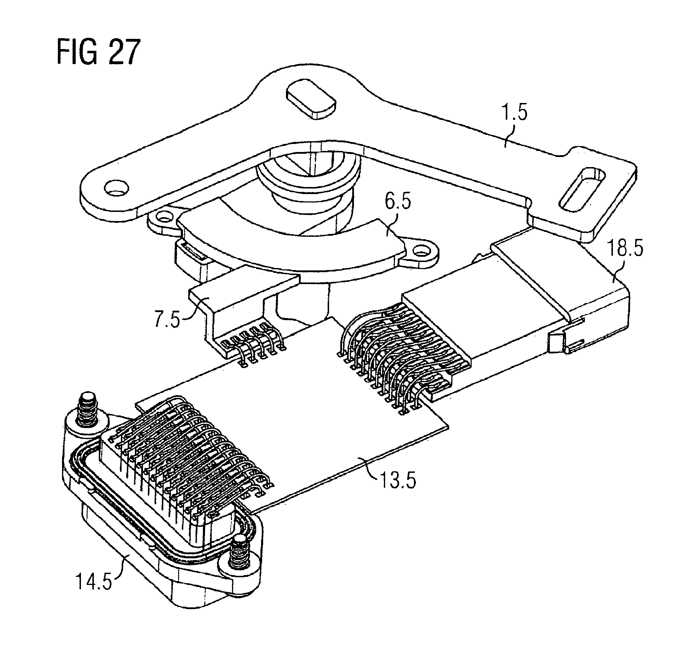

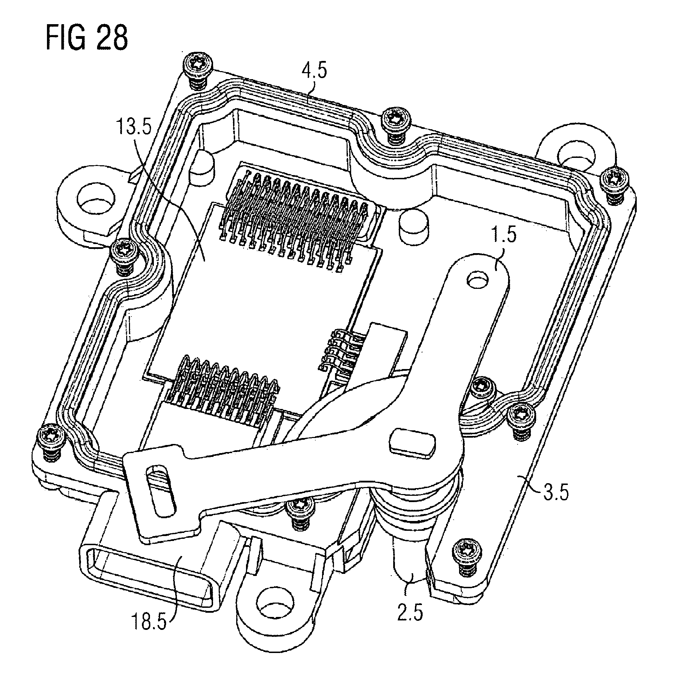

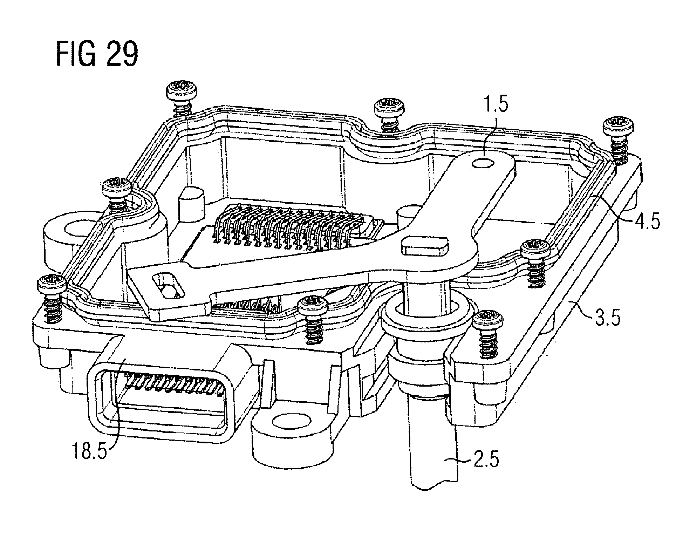

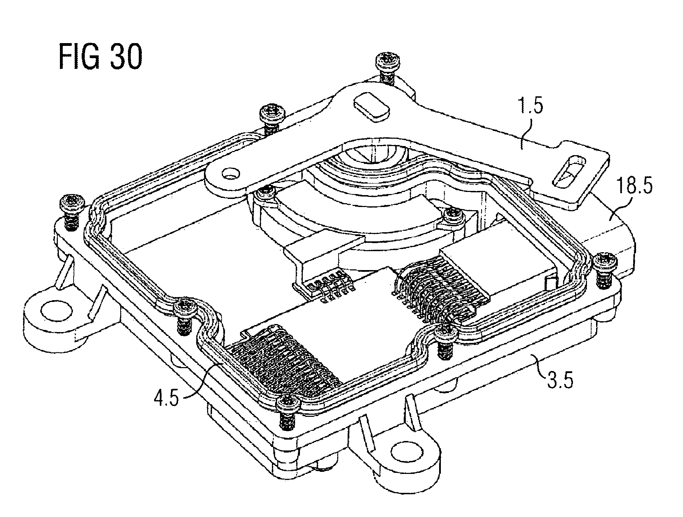

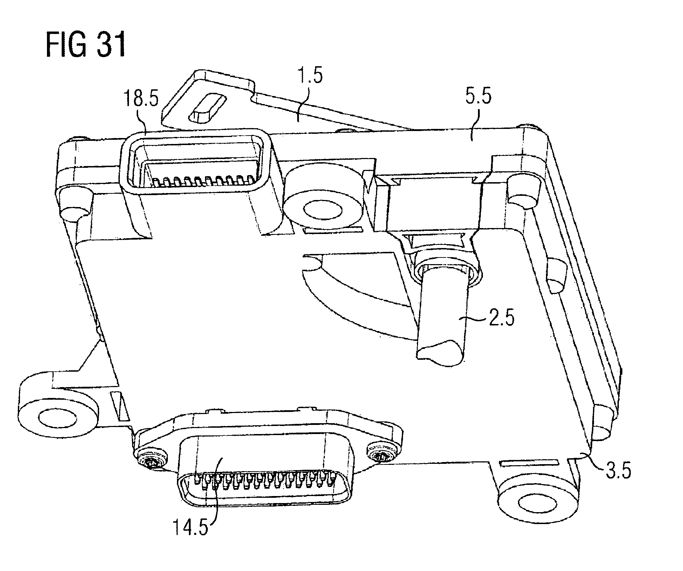

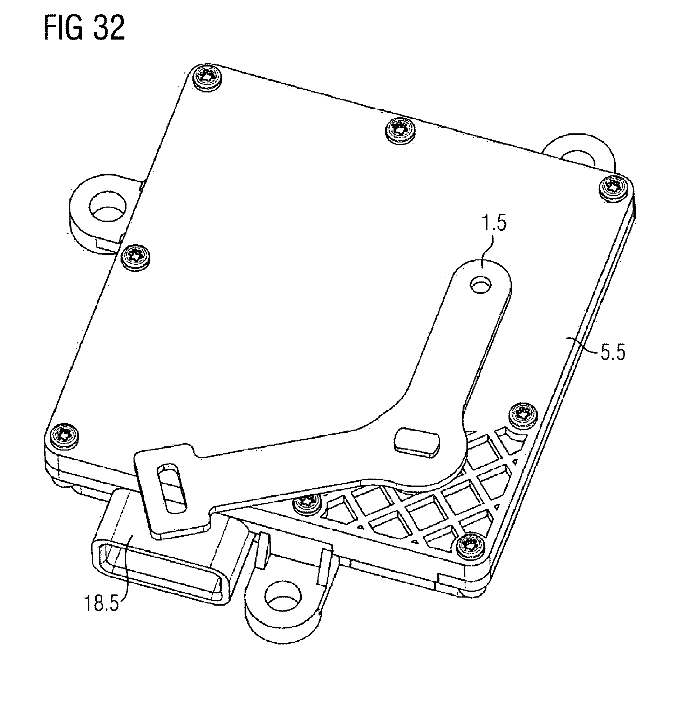

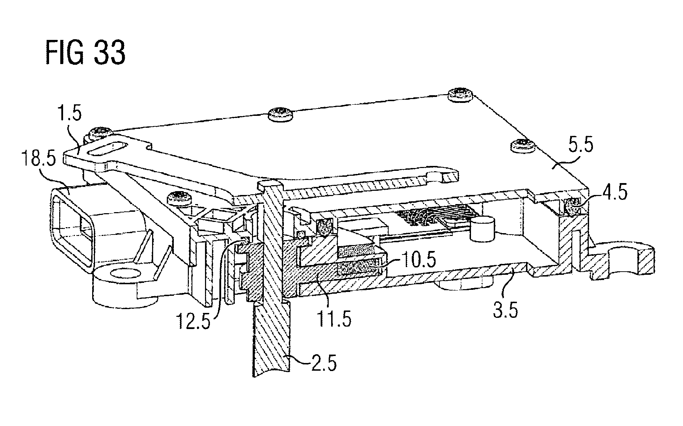

Eine fünfte Ausführungsform (Fig. 26 bis 33) unterscheidet sich von der vierten Ausführungsform dadurch, dass der Schaltwellen-Hebel 1.5 sich nach der Montage oberhalb der TCU befindet, das heißt die TCU befindet sich zwischen dem Hebel 2.5 und dem Getriebegehäuse. Das Schaltwellen-Ende steht über das TCU-Gehäuse hinaus und befindet sich nicht im hermetisch abgedichteten Bereich.

Der Winkelpositionssensor-Magnet 10.5 ist mit Kunststoff umspritzt, an diesem Kunststoff-Magnetträger 11.5 wird ein O-Ring 12.5 eingelegt. Dieser Magnetträger 11.5 wird in dem Gehäuseunterteil 3.5 von außen schwenkbar und verliersicher montiert und ist in radialer Richtung schwimmend gelagert. Im Gegensatz zur vierten Ausführungsform ist in diesem Fall keine gesonderte Abdeckung erforderlich, sondern der Magnetträger 11.5 kann unmittelbar mit dem Gehäuseoberteil arretiert werden.

Die Positionierung der TCU erfolgt bei der Montage des Steuergerätes auf das Getriebe durch das Aufstecken des Hydraulik- & Sensoriksteckers 14.5 auf einen nicht dargestellten Gegenstecker.

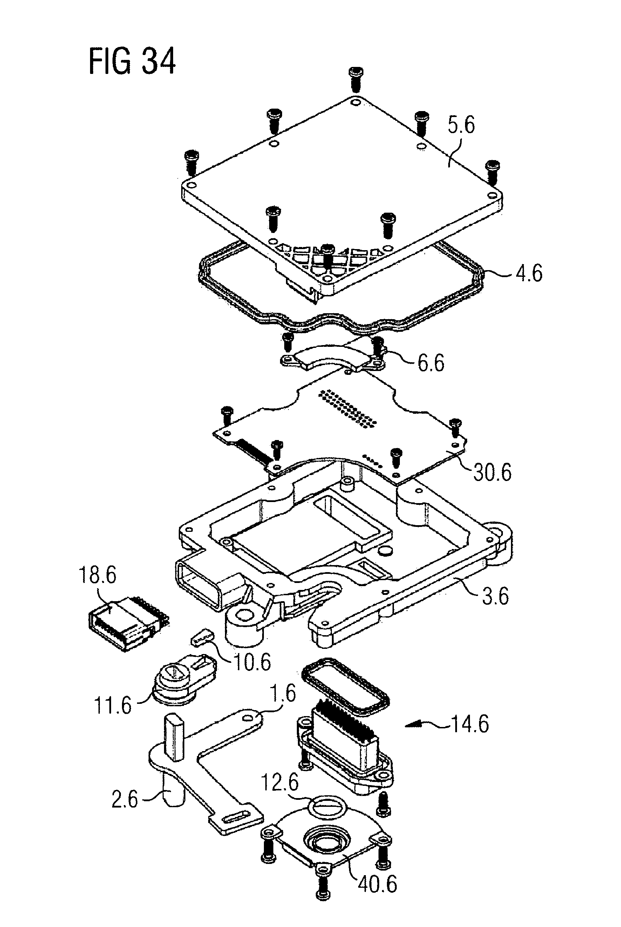

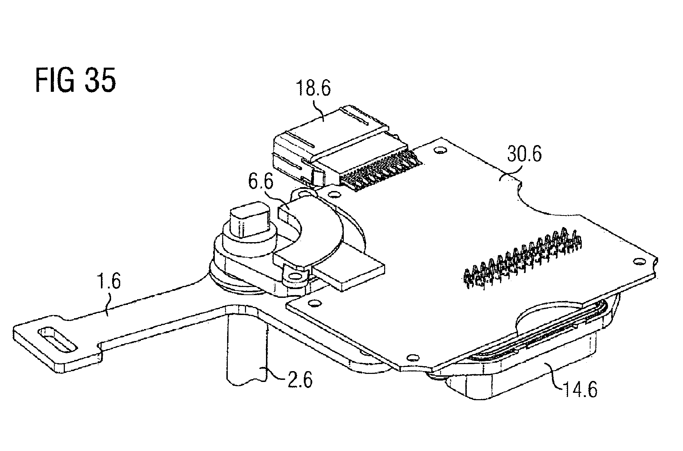

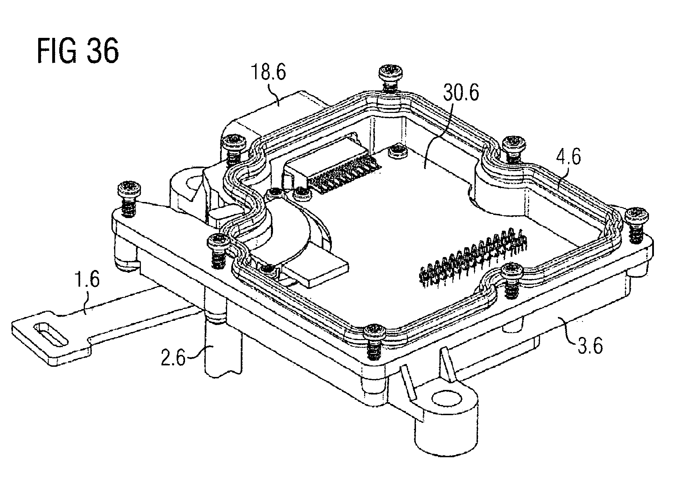

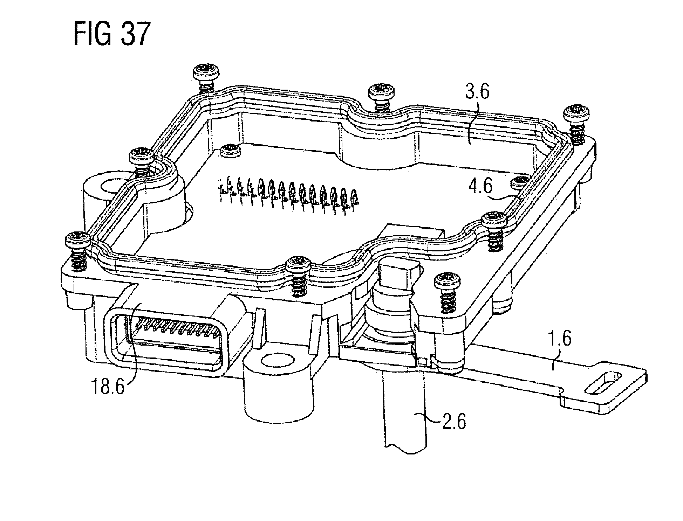

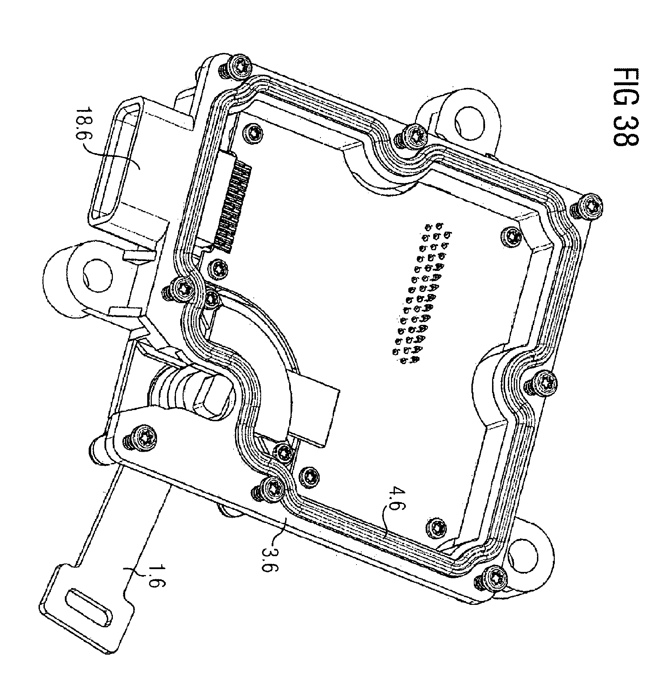

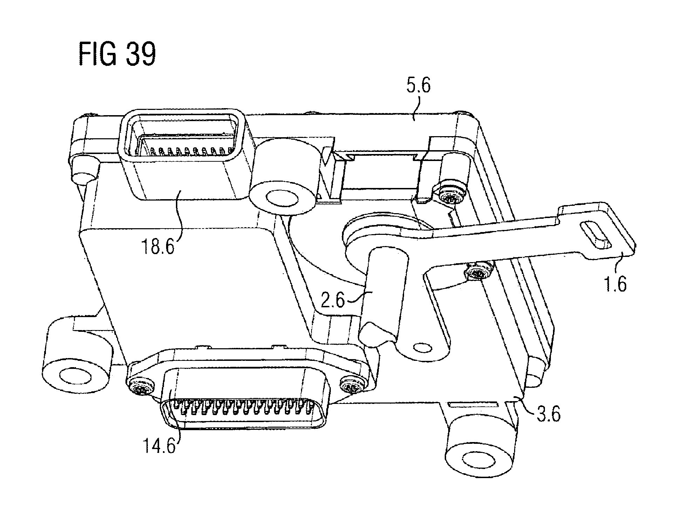

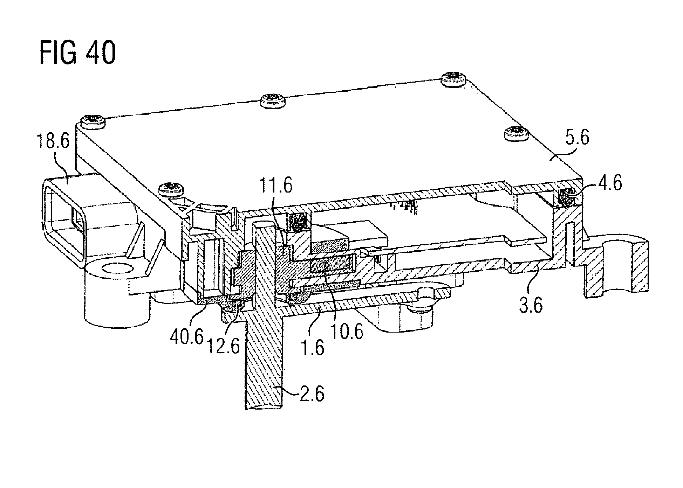

In den Fig. 34 bis 40 ist ein sechstes Ausführungsbeispiel dargestellt, das der vierten Ausführungsform sehr ähnlich ist. Auch bei dieser Ausführungsform befindet sich der Schaltwellen-Hebel 2.6 nach der Montage zwischen der TCU und dem Getriebegehäuse. Das Schaltwellen-Ende steht nicht über das TCU-Gehäuse hinaus und befindet sich nicht im hermetisch abgedichteten Bereich.

Auch hier ist der Winkelpositions-Sensor 6.6 (z.B. PLCD) in einer Bogensegment-Bauweise ausgeführt und zur Achse der Schaltwelle 2.6 zentriert positioniert.

Die Getriebesteuerungs-Elektronik 9.6 ist aber ähnlich wie im dritten Ausführungsbeispiel zusammen mit der Winkelpositions-sensor-Elektronik 7.6 auf einer gemeinsamen Leiterplatte 30.6 untergebracht. Die Leiterplatte 30.6 wird am Boden des Gehäuseunterteils 3.6, z.B. mittels Verklebung oder Verschraubung, befestigt.

Ähnlich der vierten Ausführungsform ist der Hydraulik- & Sensorikstecker 14.6 abgedichtet am Gehäuseunterteil 3.6 angebracht. Dieser Stecker 14.6 kontaktiert aber mittels einer "Press Fit" -Steckverbindung die Getriebesteuerungs-Elektronik 9.6. Die Kontaktierung, mit einem das Getriebegehäuse abdichtenden, nicht dargestellten Gegenstecker erfolgt bei der Montage der TCU auf das Getriebe.

Auch der Verbau des Fahrzeugsteckers 18.6 erfolgt in analoger Weise zur dritten Ausführungsform.

Der Winkelpositionssensor-Magnet 10.6, der Magnetträger 11.6 und der o-Ring 12.6 sind analog zur vierten Ausführungsform angeordnet.

Die Positionierung der TCU erfolgt auch bei dieser Ausführungsform bei der Montage des Steuergerätes auf das nicht dargestellte Getriebe durch das Aufstecken des Hydraulik- & Sensoriksteckers 14.6 auf den nicht dargestellten Gegenstecker.

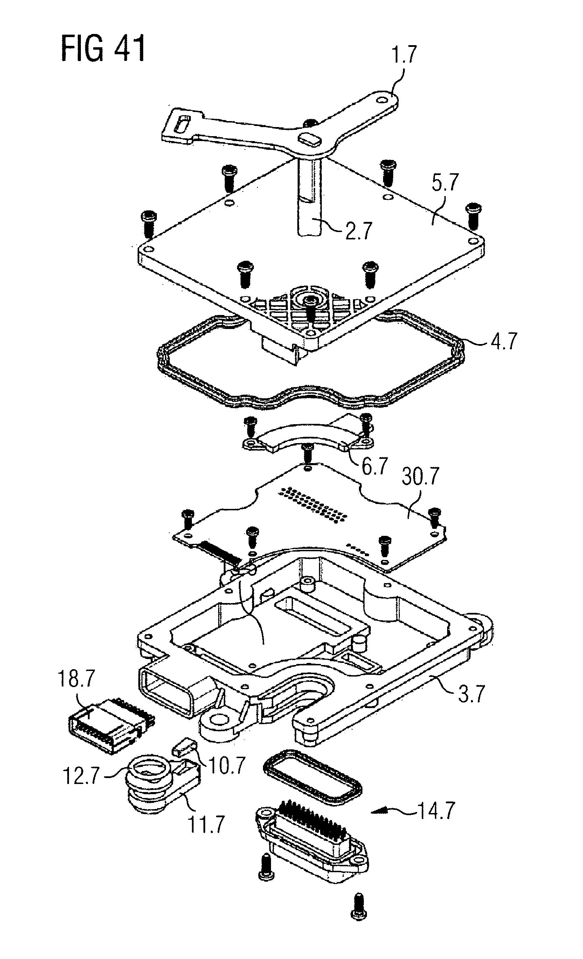

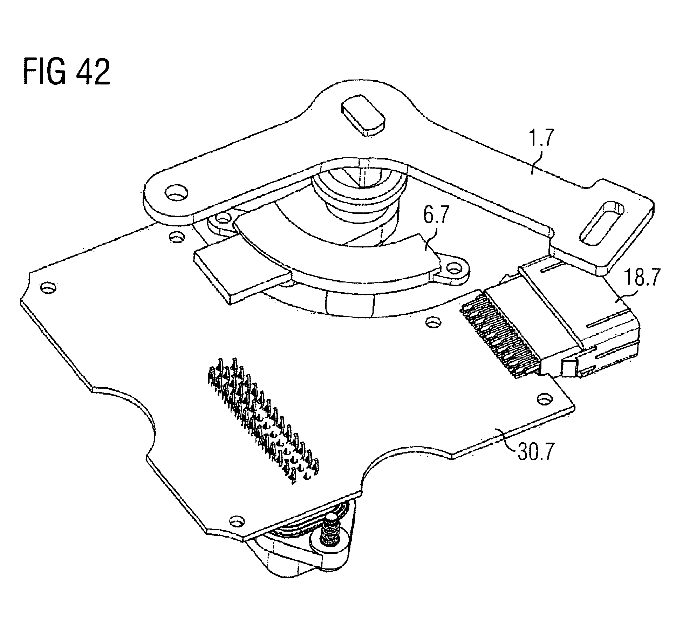

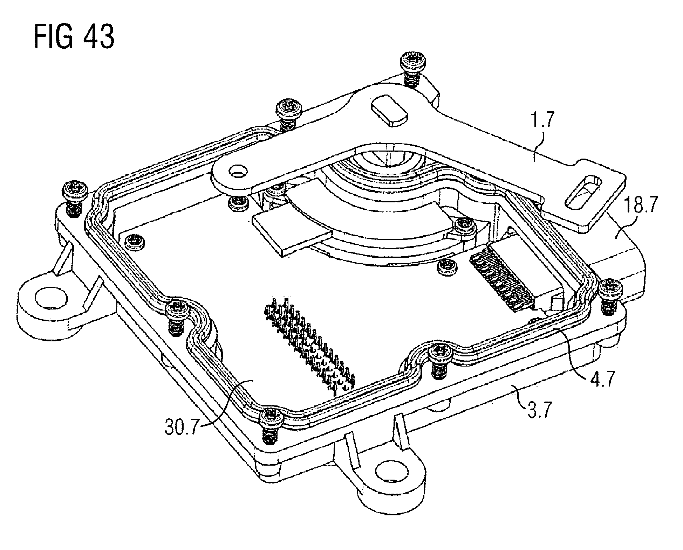

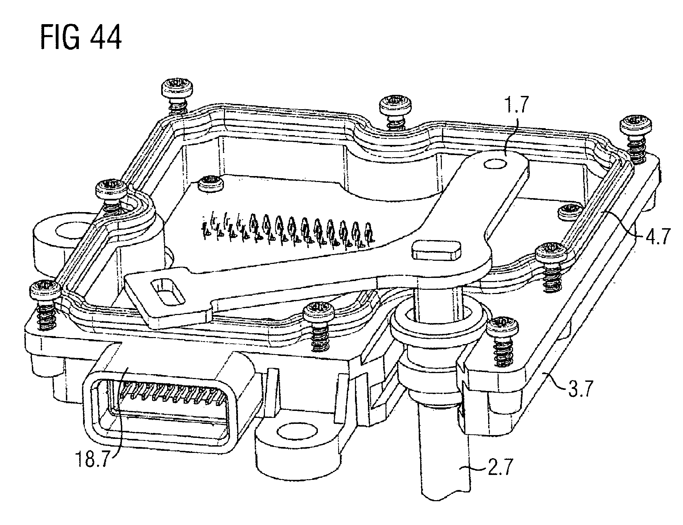

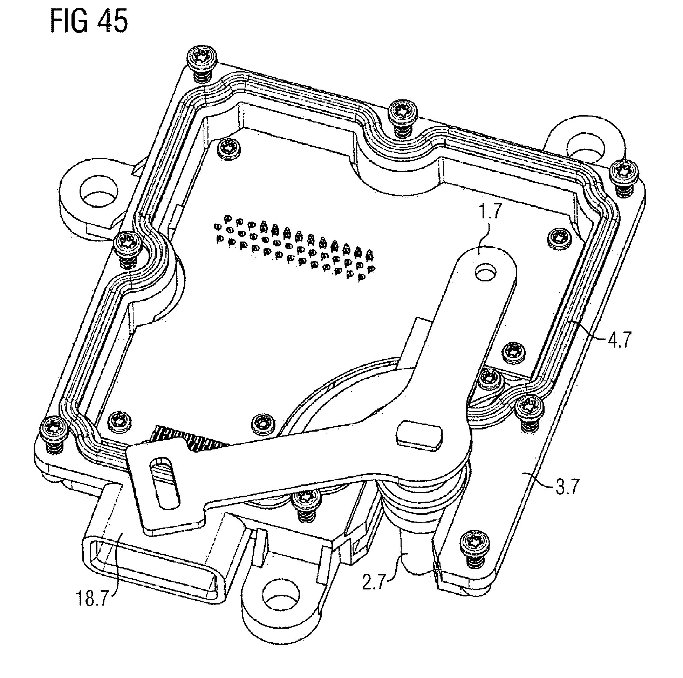

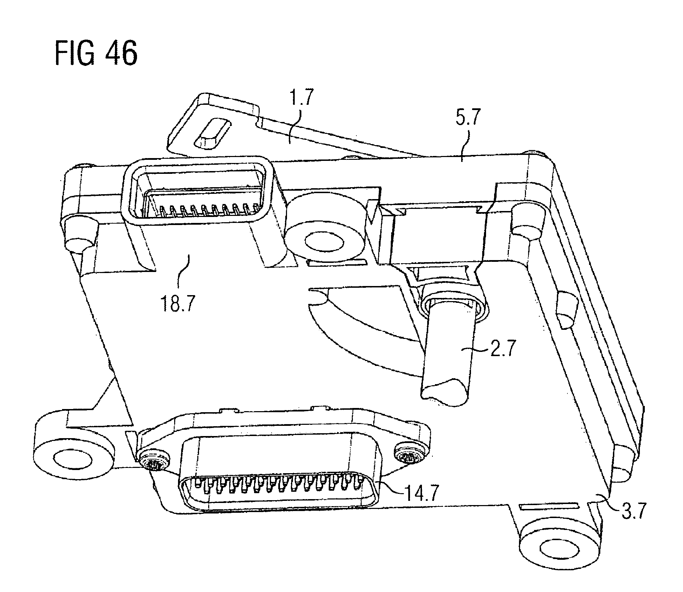

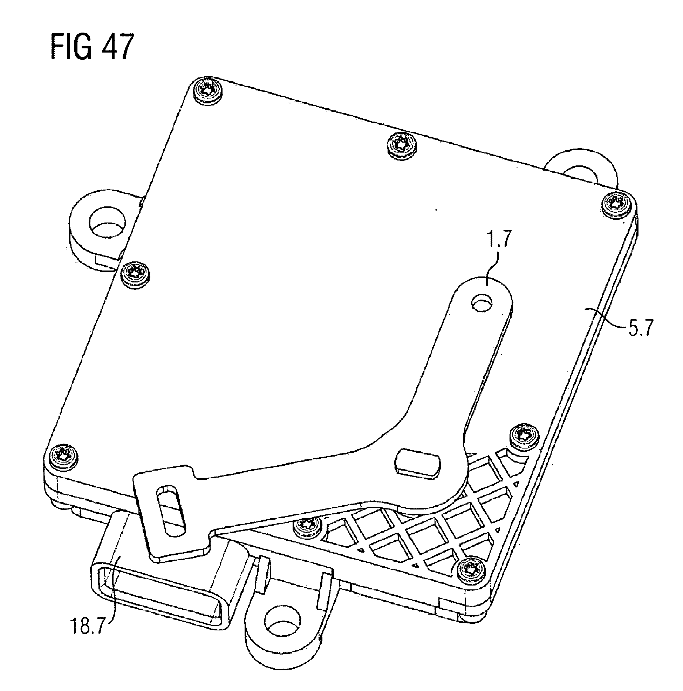

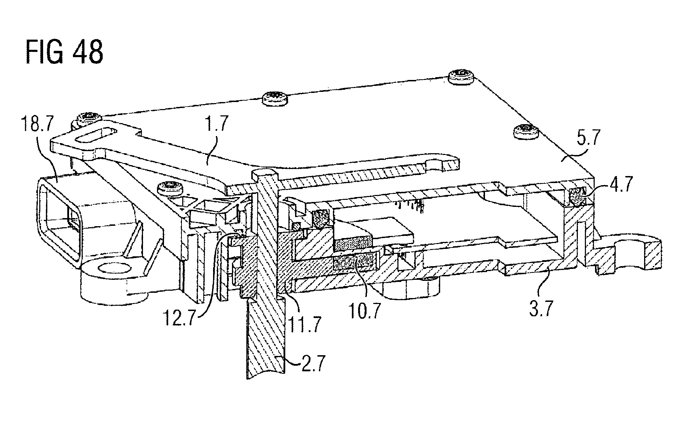

Eine in den Fig. 41 bis 48 dargestellte siebte Ausführungsform ist sozusagen eine Kombination der Ausführungsformen 5 und 6.

Der Schaltwellen-Hebel 1.7 befindet sich nach der Montage oberhalb der TCU, das heißt die TCU befindet sich zwischen dem Hebel 2.7 und dem Getriebegehäuse. Das Schaltwellen-Ende steht über das TCU-Gehäuse hinaus und befindet sich nicht im hermetisch abgedichteten Bereich.

Der Winkelpositionssensor-Magnet 10.7 ist mit Kunststoff umspritzt, an diesem Kunststoff-Magnetträger 11.7 wird ein O-Ring 12.7 eingelegt. Dieser Magnetträger 11.7 wird in dem Gehäuseunterteil 3.7 von außen schwenkbar und verliersicher montiert und ist in radialer Richtung schwimmend gelagert. Im Gegensatz zur vierten bzw. sechsten Ausführungsform ist in diesem Fall keine gesonderte Abdeckung erforderlich, sondern der Magnetträger 11.7 kann unmittelbar mit dem Gehäuseoberteil arretiert werden. Die übrigen Elemente sind analog zum sechsten Ausführungsbeispiel ausgestaltet.

Selbstverständlich sind die Gestaltungsmerkmale und Ausführungsvarianten der einzelnen Elemente der verschiedenen beschriebenen Ausführungsformen auch beliebig miteinander kombinierbar. So kann zum Beispiel die erste Ausführungsform durch einen einfachen Wechsel der Materialien des Gehäuseober- und -unterteils ohne weiteres eine thermische Anbindung zum Getriebe erhalten. Ebenso kann der Stellhebel alternativ zu der in der zur ersten Ausführungsform beschriebenen Lösung oberhalb der TCU angeordnet werden und dann das Winkelpositions-Sensor-Design der zweiten Ausführungsform zum Einsatz kommen. Derartige Modifizierungen und Kombinationen der einzelnen Ausführungsformen sind selbstverständlich möglich.

Durch die erfindungsgemäße Ausgestaltung eines Getriebesteuergeräts ergeben sich folgende Vorteile:
- Die Schaltwelle befindet sich außerhalb des Elektronikraums. Somit ist keine aufwendige und kostspielige dynamische Dichtung zur sich drehenden Schaltwelle notwendig, sondern es können einfache statische Dichtungen zur hermetischen Abdichtung verwendet werden.
- Der Stellhebel kann durch geeignete Wahl der Winkelpositionssensor-Varianten sowohl oberhalb als auch unterhalb der TCU positioniert werden.
- Der Winkelpositions-Sensor befindet sich im Elektronikraum, der das Sensorsignal erzeugende Magnet außerhalb. Der Magnet ist vor Verschmutzung durch Abdeckungen und einen O-Ring geschützt. Da das TCU-Gehäuse wegen der Sensorik nicht durchbrochen ist, wird eine zusätzliche fehleranfällige Dichtstelle vermieden.
- Ein Gehäuseunterteil aus Kunststoff kann thermisch zum Getriebe abschirmen, um die Wärme des Getriebes von der TCU fern zu halten (Ausführungsformen 1 bis 3).
- Ein Gehäuseunterteil aus Aluminiumguss kann thermisch zum Getriebe angebunden werden, um die Wärme der TCU an das Getriebegehäuse weiterzuleiten (Ausführungsformen 4 bis 7) .
- Ein Gehäuseoberteil aus Aluminiumguss kann die Wärme der TCU über den Fahrtwind in den Motorraum abgeben (Ausführungsformen 1 bis 3).
- Der Hydraulik- & Sensorikstecker wird bei der Montage der TCU ans Getriebe direkt mit dem Gegenstecker kontaktiert. Eine zusätzliche Verkabelung ist aufgrund dessen nicht notwendig, dies führt zu einer Kosten-, Montageaufwand- und Fehlerreduzierung und zu einer höheren Qualität.
- Die Montagetoleranzen (Schaltwelle zu Gegenstecker "Hydraulik- & Sensorikstecker") können durch den in der TCU schwimmend gelagerten Hydraulik- & Sensorikstecker kompensiert werden (Ausführungsformen 1 bis 3).
- Die Montagetoleranzen (Schaltwelle zu Gegenstecker "Hydraulik- & Sensorikstecker") können durch den in der TCU schwimmend gelagerten Winkelpositionssensor-Magnetträger mit O-Ring kompensiert werden (Ausführungsformen 2 bis 7) .

Die vorliegende Erfindung erlaubt erstmals vorteilhaft die Lagerung des Schaltwellenhebels 1 einer Getriebesteuerung außerhalb dessen Gehäuses 3, 5. Sie eignet sich daher insbesondere für im Motorraum unmittelbar am Getriebe eines Kraftfahrzeuges angebaute Getriebesteuerungen.

## Patentansprüche

1. Steuergerät für ein Kraftfahrzeuggetriebe, insbesondere ein am Kraftfahrzeuggetriebe angebautes Steuergerät, umfassend:
- ein Gehäuse aus einem Gehäuseunterteil (3), einer Gehäusedichtung (4) und einem Gehäuseoberteil (5);
- eine innerhalb des Gehäuses angeordnete Leiterplatte (8), auf der ein Winkelpositionssensor (6) mit einer Winkelpositionssensorelektronik (7) sowie ein Winkelpositionssensormagnet (10) mit einem Magnetträger (11) angeordnet sind;
- einen am Gehäuseunterteil (3) gelagerten Hydraulik und Sensorikstecker (14), der über eine Leiterplatte (15) mit einer Getriebesteuerungselektronik (9) verbunden ist, welche die Leiterplatte (8) kontaktiert; und
- einen Schaltwellenhebel (1), welcher mittels einer Schaltwelle (2) außerhalb des Gehäuses gelagert ist, **dadurch gekennzeichnet, dass**
der Magnetträger (11) mit dem Winkelpositionssensormagnet (10) im Gehäuseunterteil (3) verliersicher und außerhalb des Gehäuses schwenkbar angeordnet ist.

2. Steuergerät nach Anspruch 1, **dadurch gekennzeichnet,**
**dass** von Gehäuseunterteil (3; 3.4 bis 3.7) und Gehäuseoberteil (5; 5.4 bis 5.7) das eine als Kunststoffdeckel (3; 5.4 bis 5.7) und das andere als Aluminiumgusswanne (5; 3.4 bis 3.7) ausgebildet ist.

3. Steuergerät nach einem der vorherigen Anspruche, **dadurch gekennzeichnet, dass** die Getriebesteuerungselektronik (9) in einer Multilayer-Keramik-Substratbauweise ausge-Führt ist.

4. Steuergerät nach einem der vorherigen Ansprüche, **dadurch gekennzeichnet, dass** eine Kontaktierung mit einem das Gehäuse abdichtenden Gegenstecker bei der Montage des Gehäuses auf das Getriebe erfolgt.

5. Steuergerät nach einem der vorherigen Ansprüche, **dadurch gekennzeichnet, dass** der Hydaulik- und Sensorikstecker (14) schwimmend am Gehäuseunterteil (3) gelagert ist.

6. Steuergerät nach einem der Ansprüche 1 bis 5 , **dadurch gekennzeichnet, dass** der Hydraulik- und Sensorikstecker (14) über eine flexible Leiterplatte (15) mit der Getriebesteuerungselektronik (9) verbunden ist.

7. Steuergerät nach einem der Ansprüche 1 bis 5 , **dadurch gekennzeichnet, dass** der Hydraulik- und Sensorikstecker (14.2) über eine Bondverbindung mit der Getriebesteuerungselektronik (9.2) verbunden ist.

8. Steuergerät nach einem der Ansprüche 1 bis 5 oder 7, **dadurch gekennzeichnet, dass** der Magnetträger (11.2) in radialer Richtung schwimmend im Gehäuse gelagert ist.

9. Steuergerät nach einem der Ansprüche 1 bis 4 , **dadurch gekennzeichnet, dass** die Getriebesteuerungselektronik (9.3) zusammen mit der Winkelpositionssensorelektronik (7.3) auf einer gemeinsamen Leiterplatte (30) angeordnet

10. Steuergerät nach Anspruch 9 , **dadurch gekennzeichnet, dass** der Hydraulik- und Sensorikstecker (14.3) über eine "Press-fit"-Steckverbindung die Getriebesteuerungselektronik (9.3) kontaktiert.

## Claims

1. Control unit for a motor vehicle transmission, in particular a control unit which is fitted on the motor vehicle transmission, comprising:
- a housing comprising a lower housing part (3), a housing seal (4) and an upper housing part (5);
- a printed circuit (8) which is arranged inside the housing and on which an angular position sensor (6) having an angular position sensor electronics system (7) and also an angular position sensor magnet (10) having a magnet carrier (11) are arranged;
- a hydraulics and sensor system plug (14) which is mounted on the lower housing part (3) and is connected by means of a printed circuit (15) to a transmission controller electronics system (9) which makes contact with the printed circuit (8); and
- a selector shaft lever (1) which is mounted outside the housing by means of a selector shaft (2), **characterized in that**
the magnet carrier (11) having the angular position sensor magnet (10) is arranged captively in the lower housing part (3) and in a pivotable manner outside the housing.

2. Control unit according to Claim 1, **characterized in that** one of either the lower housing part (3; 3.4 to 3.7) and the upper housing part (5; 5.4 to 5.7) is in the form of a plastic cover (3; 5.4 to 5.7) and the other is in the form of a cast aluminium trough (5; 3.4 to 3.7).

3. Control unit according to one of the preceding claims, **characterized in that** the transmission controller electronics system (9) has a multilayer ceramic substrate construction.

4. Control unit according to one of the preceding claims, **characterized in that** contact is made with a mating plug, which seals off the housing, when the housing is mounted on the transmission.

5. Control unit according to one of the preceding claims, **characterized in that** the hydraulics and sensor system plug (14) is mounted on the lower housing part (3) in a floating manner.

6. Control unit according to one of Claims 1 to 5, **characterized in that** the hydraulics and sensor system plug (14) is connected to the transmission controller electronics system (9) by means of a flexible printed circuit (15).

7. Control unit according to one of Claims 1 to 5, **characterized in that** the hydraulics and sensor system plug (14.2) is connected to the transmission controller electronics system (9.2) by means of a bonding connection.

8. Control unit according to one of Claims 1 to 5 or 7, **characterized in that** the magnet carrier (11.2) is mounted in the housing so as to float in the radial direction.

9. Control unit according to one of Claims 1 to 4, **characterized in that** the transmission controller electronics system (9.3) is arranged together with the angular position sensor electronics system (7.3) on a common printed circuit (30).

10. Control unit according to Claim 9, **characterized in that** the hydraulics and sensor system plug (14.3) makes contact with the transmission controller electronics system (9.3) by means of a press-fit plug connection.

## Revendications

1. Appareil de commande pour transmission de véhicule, en particulier un appareil de commande monté sur la transmission d'un véhicule, comprenant :
- un boîtier constitué d'une partie inférieure de boîtier (3), d'un joint d'étanchéité de boîtier (4) et d'une partie supérieure de boîtier (5) ;
- une carte de circuits imprimés (8) disposée à l'intérieur du boîtier, sur laquelle un capteur de position angulaire (6) avec une électronique de capteur de position angulaire (7) ainsi qu'un aimant de capteur de position angulaire (10) avec un support d'aimant sont disposés (11) ;
- un raccord d'hydraulique et de capteur (14) positionné sur la partie inférieure (3) du boîtier, lequel est connecté, par le biais d'une carte de circuits imprimés (15), à une électronique de commande de transmission (9), qui établit un contact avec la carte de circuits imprimés (8) ; et
- un levier de l'arbre de commande (1), qui est positionné, moyennant un arbre de commande (2), à l'extérieur du boîtier, **caractérisé en ce que**
le support d'aimant (11) avec l'aimant de capteur de position angulaire (10) est disposé de manière imperdable dans la partie inférieure (3) du boîtier et à pivotement à l'extérieur du boîtier.

2. Appareil de commande selon la revendication 1, **caractérisé en ce que**, dans la partie inférieure de boîtier (3 ; 3.4 à 3.7) et la partie supérieure de boîtier (5 ; 5. 4 à 5 . 7) , de premiers segments (3 ; 5.4 à 5.7) se présentent sous la forme d'un couvercle en matériau synthétique et de seconds segments (5 ; 3.4 à 3.7) sous la forme d'une cuvette en fonte d'aluminium.

3. Appareil de commande selon l'une quelconque des revendications précédentes, **caractérisé**
**en ce que** l'électronique de commande de transmission (9) se présente sous la forme d'un type de structure de substrat céramique multicouche.

4. Appareil de commande selon l'une quelconque des revendications précédentes, **caractérisé**
**en ce que** l'établissement d'un contact s'effectue, lors du montage du boîtier sur la transmission, avec un connecteur complémentaire qui étanchéifie le boîtier.

5. Appareil de commande selon l'une quelconque des revendications précédentes, **caractérisé**
**en ce que** le raccord d'hydraulique et de capteur (14) est placé en position flottante sur la partie inférieure (3) du boîtier.

6. Appareil de commande selon l'une quelconque des revendications 1 à 5, **caractérisé en ce que** le raccord d'hydraulique et de capteur (14) est relié, par le biais une carte de circuits imprimés (15) flexible, à l'électronique de commande de transmission (9).

7. Appareil de commande selon l'une quelconque des revendications 1 à 5, **caractérisé**
**en ce que** le raccord d'hydraulique et de capteur (14.2) est relié, par le biais d'un raccordement par soudures de fils métalliques, à l'électronique de commande de transmission (9.2).

8. Appareil de commande selon l'une quelconque des revendications 1 à 5 ou 7, **caractérisé en ce que** le support d'aimant (11.2) est placé radialement, en position flottante, dans le boîtier.

9. Appareil de commande selon l'une quelconque des revendications 1 à 4, **caractérisé en ce que** l'électronique de commande de transmission (9.3) est disposée conjointement avec l'électronique de capteur de position angulaire (7.3) sur une carte de circuits imprimés (30) commune.

10. Appareil de commande selon la revendication 9, **caractérisé en ce que** le raccord d'hydraulique et de capteur (14.3) établit un contact avec l'électronique de commande de transmission (9.3) par le biais d'un raccord de connexion Press-Fit.
